# EUROPÄISCHE PATENTSCHRIFT

(11) **EP 3 235 620 B1**
(45) Veröffentlichungstag und Bekanntmachung des Hinweises auf die Patenterteilung: **14.11.2018**
(21) Anmeldenummer: 17165752.1
(22) Anmeldetag: 10.04.2017
(51) Int. Cl.: B29C 45/16, F16G 5/12, B29C 45/00, B29D 29/10

(54) **VERFAHREN ZUR HERSTELLUNG EINES ENDLOSEN TREIBRIEMENS**
METHOD FOR PRODUCING A CONTINUOUS TRANSMISSION BELT
PROCÉDÉ DE FABRICATION D'UNE COURROIE DE TRANSMISSION CONTINUE

(30) Priorität: 22.04.2016 DE 102016107553
(43) Veröffentlichungstag der Anmeldung: 25.10.2017
(73) Patentinhaber: Arntz Beteiligungs GmbH & Co. KG, 37671 Höxter (DE)
(72) Erfinder: MICHEL, Frank, 33034 Brakel (DE); SCHULTE, Sven, 37619 Bodenwerder (DE); MIKUS, Frank, 33014 Bad Driburg (DE)
(74) Vertreter: Gramm, Lins & Partner Patent- und Rechtsanwälte PartGmbB

(56) Entgegenhaltungen:
- JP-A- 2003 025 372
- JP-A- 2003 251 706
- JP-A- 2005 040 951
- JP-A- 2013 213 576

## Beschreibung

Die Erfindung betrifft ein Verfahren zur Herstellung eines ringförmigen, in einer Laufrichtung endlosen Treibriemens mit einer radial äußeren Deckschicht aus einem ersten Material, einer Zugstranglage mit in Laufrichtung ausgerichteten Zugsträngen und einem aus einem zweiten Material, das ein Elastomer ist, bestehenden Unterbau, der zur Anlage an passenden Scheiben eines Antriebs ausgebildet ist, wobei zunächst die Zugstränge auf das erste Material aufgebracht werden und anschließend der Unterbau aus dem zweiten Material in einer Spritzgussform geformt und vernetzt wird.

Treibriemen der hier angesprochenen Art sind insbesondere Keilriemen und Keilrippenriemen.

Derartige Treibriemen werden seit vielen Jahren in großer Anzahl hergestellt. Das dabei übliche Verfahren sieht vor, zunächst Halbzeuge herzustellen, die insbesondere Elastomermaterialien in Form von Elastomerfolien und die Zugstränge enthalten. Auf einer speziellen Konfektionsmaschine wird dabei ein Rohwickel hergestellt. Anschließend findet die Vernetzung, insbesondere Vulkanisation, in einem Vulkanisationskessel statt. Dabei kann der Kessel eine profilierte Form aufweisen, sodass bei der Vulkanisation eine gewünschte Formgebung stattfindet. Auf diese Weise kann die Trapezform eines Keilriemens oder auch die Profilierung der Oberseite eines Keilrippenriemens erreicht werden. Alternativ wird die Vulkanisation in einem nicht profilierten Kessel durchgeführt und nachträglich eine Profilbildung durch Schleifen hergestellt. Das letztgenannte Verfahren ist aufwendiger, erlaubt aber eine höhere Fertigungsgenauigkeit.

Die bekannten, seit Jahren verwendeten Herstellungsverfahren erfordern somit mehrere Verfahrensschritte, die einen gewissen Mindestaufwand mit sich bringen. Es besteht daher seit Jahren das Bedürfnis, die Herstellung derartiger Treibriemen zu rationalisieren.

In der DE 1 964 090 A ist bereits vorgeschlagen worden, einen endlosen Treibriemen in einer Spritzgussform zu fertigen. Hierzu wird um einen Ringdorn eine Deckschicht aus einem Gewebematerial gewickelt und ein hochelastisches gummiähnliches Material konzentrisch auf die Gewebeschicht aufgewickelt, bevor es teilweise geschmolzen und verbunden wird. Danach wird eine Schnur als Zugstrang spiralförmig um die Schicht gelegt. Der so vorbereitete Rohwickel wird dann in eine Spritzgussform eingelegt, die parallel zu der Längsebene des Ringdorns längs geteilt ist. Beim Schließen der Formteile entsteht radial außen von dem Rohwickel eine Kavität, beispielsweise in Keilform, in die das Material für den Unterbau eingespritzt wird. Der Unterbau wird somit im Spritzgussverfahren hergestellt und das Material kann in der Form vulkanisiert werden. Dieses bekannte Verfahren erfordert ein umständliches Hantieren des auf den Ringdorn aufgebrachten Rohwickels und ein manuelles Einlegen des auf den Ringdorn aufgebrachten Rohwickels in die relativ kompliziert aufgebaute Spritzgussform. Trotz der Verwendung eines an sich einfacheren Spritzgussverfahrens hat sich gegenüber den herkömmlichen Herstellungsverfahren keine Verbesserung ergeben, sodass der Aufwand für eine Spritzgussvorrichtung nicht gerechtfertigt war.

Durch JP 2005040951 A1, JP 2003251706 A1 und JP 2003025372 A1 sind Verfahren zur Herstellung eines Zahnriemens bekannt, der den oben erwähnten Aufbau aus einer radial äußeren Deckschicht, einer Zugstranganlage und einem Unterbau aufweist. Dabei wird sowohl die Deckschicht als auch der Unterbau im Spritzgussverfahren hergestellt, wozu zwei unterschiedliche Spritzgusskavitäten vorgesehen sind. In allen Fällen geschieht der Aufbau dadurch, dass zunächst an einem für die Ausbildung der Zähne geformten Kern innerhalb der ersten Kavität der Unterbau hergestellt wird, dann die Zugträgerschicht gewickelt und anschließend die Deckschicht im Spritzgussverfahren aufgebracht wird. In allen Fällen sind die Spritzgusskavitäten in einem Block ausgebildet und werden mit demselben Material beschickt. Der Unterbau und die Deckschicht bestehen somit zwangsläufig aus demselben Material.

Der vorliegenden Erfindung liegt die Aufgabe zugrunde, die Herstellung eines Treibriemens der eingangs erwähnten Art zu vereinfachen und dadurch preiswerter zu gestalten.

Zur Lösung dieser Aufgabe dienen die in den Patentansprüchen 1, 3 und 6 angegebenen Verfahren. Das erfindungsgemäße Herstellungsverfahren sieht somit vor, dass sowohl das die Zugträgerlage aufnehmende erste Material als auch das zweite Material, das den Unterbau bildet und sich gegebenenfalls ebenfalls bis zu den Zugträgern erstreckt, jeweils im Spritzgießverfahren auf den vorzugsweise zylindrischen, insbesondere vorzugsweise kreiszylindrischen Kern aufgebracht werden. Da beide Spritzgussvorgänge mit der Anordnung auf demselben Kern erfolgen, wird auf diese Weise eine einfache Handhabung ermöglicht, weil beide Spritzvorgänge in derselben Spritzgießform stattfinden können oder ein einfacher Transport von der ersten Spritzgussform zu der zweiten Spritzgussform möglich ist, wobei die Zugstränge auf das durch Spritzgießen aufgebrachte erste Material aufgewickelt werden. Die Zugstränge können dabei durch eine einzige spiralförmig aufgewickelte Schnur gebildet sein, wobei als "Zugstränge" jeweils eine vollständige Windung der Schnur oder des Drahtes bezeichnet werden.

Als erstes Material für die Deckschicht und zweites Material für den Unterbau können alle üblicherweise verwendeten Materialien ausgewählt werden, die im Spritzgussverfahren aufgebracht werden können. Sofern zwischen den beiden Materialien keine Zwischenschicht eingefügt wird, sollten die beiden Materialien miteinander verträglich sein. Es ist dabei nicht ausgeschlossen, dass das erste Material und das zweite Material identisch sind und lediglich in unterschiedlichen Spritzgießgängen aufgebracht werden, wobei zwischen den Spritzgießgängen die Wicklung der Zugstränge erfolgt.

Es ist möglich, die Deckschicht beispielsweise mit einer Gewebelage an der Oberfläche abzuschließen, in dem die Gewebelage auf den zylindrischen Kern vor dem ersten Spritzvorgang aufgebracht wird.

Der Unterbau kann unprofiliert oder profiliert ausgebildet werden. Eine Profilierung beim Spritzgießvorgang ist insbesondere für die Herstellung von Keilrippenriemen vorteilhaft, da dadurch Arbeitsgänge für die Ausbildung der Keilrippen eingespart werden können. Dennoch kann der erfindungsgemäße Treibriemen in üblicher Weise nachbehandelt werden, insbesondere auch im Bereich des Angusses der im Spritzgussverfahren hergestellten Teile des Treibriemens.

In einer Ausführungsform des erfindungsgemäßen Verfahrens wird der Kern in einer ersten Spritzgussform zum Umspritzen mit dem ersten Material positioniert, während der Unterbau in einer zweiten Spritzgussform gebildet wird. Somit wird der zylindrische Kern in beiden Spritzgussformen verwendet. Vorzugsweise weist er dabei Dichtflächen auf, die mit entsprechenden Dichtflächen der üblicherweise zweiteiligen Spritzgussform die Abdichtung der Kavität für das Spritzgießen der Deckschicht mit dem ersten Material und des Unterbaus mit dem zweiten Material bewirken. Nach dem zweiten Spritzgussvorgang kann der auf dem Kern gebildete Wickel durch Abziehen von dem Kern entformt werden.

In einer Ausführungsform ist der Kern ein sich durch die beiden Spritzgussformen erstreckender zylindrischer Träger. Insbesondere ist der zylindrische Träger gegenüber der Länge der Spritzgussformen sehr lang ausgebildet, sodass auf dem Träger zahlreiche Wickel der genannten Art produziert werden können, aus denen jeweils ein oder mehrere Treibriemen gebildet werden. Hierfür ist der zylindrische Träger schrittweise in seiner Längsrichtung bewegbar, sodass ein für einen Wickel vorgesehener Bereich des Trägers zunächst in die erste Spritzgussform und anschließend in die zweite Spritzgussform gelangt. Vorzugsweise erstreckt sich der zylindrische Träger durch wenigstens die erste Spritzgussform, eine Wickelstation für die Zugstränge und die zweite Spritzgussform, die jeweils eine Bearbeitungsstation gleicher Länge bilden, sodass der jeweilige Bereich des Trägers zunächst in der ersten Spritzgussform mit dem ersten Material umspritzt wird, in der anschließenden Bearbeitungsstation mit den Zugsträngen umwickelt wird und schließlich in der zweiten Spritzgussform mit dem Unterbau versehen wird, wodurch der jeweilige Wickel fertiggestellt sein kann.

Im Rahmen der Erfindung ist es selbstverständlich möglich, die genannten Bearbeitungsstationen zu ergänzen und zusätzliche Bearbeitungen vorzunehmen, beispielsweise auch ein drittes oder weiteres Spritzgießen, wenn dies beispielsweise zum Einbringen einer Klebschicht in den Bereich der Zugstränge oder für einen mehrlagigen Aufbau der Deckschicht und/oder des Unterbaus für die Konstruktion des Treibriemens sinnvoll erscheint. Nach der Fertigstellung der jeweiligen Wickel stehen diese aneinander gereiht auf dem langgestreckten Träger zur Verfügung.

In einer anderen Ausführungsform der Erfindung wird der Kern durch eine Trommel mit einer die Breite des zu produzierenden Treibriemenwickels etwas übersteigenden axialen Länge gebildet und die Spritzgussform mittels beweglicher Teile von einer Spritzgusskavität zur Aufbringung des ersten Materials auf den vorzugsweise zylindrischen Kern zu einer Spritzgusskavität für den Unterbau verstellt. Die beiden Spritzvorgänge finden somit in derselben Spritzgussform statt, die lediglich durch bewegliche Teile (Schieber) in ihrer Kavität verstellbar ist. Um den Zwischenschritt der Aufwicklung der Zugstränge nach dem Einspritzen des ersten Materials zu ermöglichen, wird die Spritzgussform vor dem Spritzvorgang für den Unterbau teilweise geöffnet. Diese teilweise Öffnung kann vorzugsweise mittels radial beweglicher Formteile erfolgen.

Im Rahmen der vorliegenden Erfindung ist es besonders bevorzugt, wenn der Spritzgussvorgang oder die Spritzgussvorgänge, die sich über die Länge des jeweiligen Wickels erstrecken, in an sich bekannter Weise mit mehreren axial angeordneten Angüssen oder mit einem Schirmanguss durchgeführt werden. Die mehreren axial angeordneten Angüsse in Form von Ringangüssen bewirken, dass das eingespritzte Material nicht zu stark abkühlt bevor es auf an einer anderen axialen Stelle eingespritztes Material auftrifft, sodass sich eine homogene Materialverteilung ergibt und "Bindenähte" vermieden werden. Dem gleichen Zweck dient die Verwendung eines Schirmangusses, der den Vorteil hat, dass das gesamte Material stirnseitig mit einer trichterförmigen Erweiterung in die Ringkammer eingeleitet wird und sich dort gleichmäßig über den Umfang und homogen in axialer Länge verteilt. Bei dieser Angussart können Bindenähte gar nicht erst entstehen.

Die Erfindung soll im Folgenden anhand von in der Zeichnung schematisch dargestellten Ausführungsbeispielen näher erläutert werden. Es zeigen:
- Figur 1: eine schematische Darstellung einer ersten Ausführungsform des erfindungsgemäßen Verfahrens unter Verwendung zweier Spritzgussformen;
- Figur 2: eine schematische Darstellung einer zweiten Ausführungsform des erfindungsgemäßen Verfahrens mit der Verwendung von zwei Spritzgussformen und einem langgestreckten Kern für zahlreiche Wickel als Fertigungseinheiten;
- Figur 3: eine schematische Darstellung einer dritten Ausführungsform des erfindungsgemäßen Verfahrens unter Verwendung einer einzigen Spritzgussform mit bewegbaren Teilen;
- Figur 4: eine schematische Darstellung einer vierten Ausführungsform des erfindungsgemäßen Verfahrens unter Verwendung einer gemeinsamen Spritzgussform mit bewegbaren Teilen.

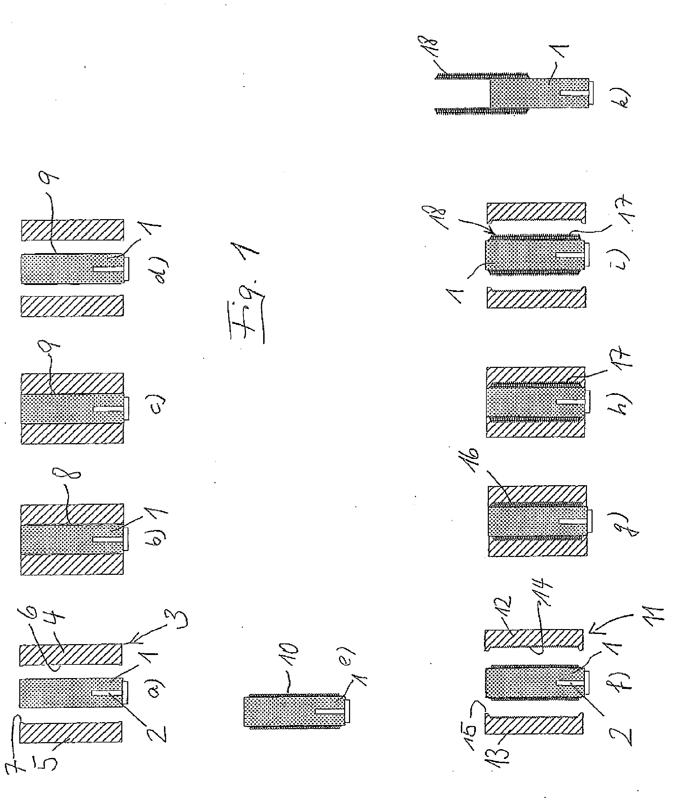

Bei dem in Figur 1 dargestellten Verfahren wird ein zylindrischer Kern 1 in Form einer Trommel auf einen Dorn 2 aufgesetzt und in eine geöffnete erste Spritzgussform 3 eingefahren, die aus zwei Formhälften 4, 5 besteht. Die Formhälften 4, 5 sind jeweils halbzylindrisch ausgebildet, sodass sie sich im geschlossenen Zustand der Form zu einem geschlossenen Hohlzylinder ergänzen.

Die Formhälften 4, 5 erstrecken sich über die gesamte Länge des Kerns 1 und weisen Innenwände 6 auf, die über nahezu die gesamte Länge parallel zu der Außenwand des zylindrischen Kerns 1 verlaufen. Der Innendurchmesser der Innenwände 6 der Formhälften 4, 5 ist dabei etwas größer als der Außendurchmesser des kreiszylindrischen Kerns 1. An axialen Enden ist der Innendurchmesser der Formhälften 4, 5 verkleinert, sodass er gleich dem Außendurchmesser des Kerns 1 ist. An diesen Enden bilden die Innenwände 6 ringförmige Dichtflächen 7 aus, die im geschlossenen Zustand (Figur 1b) der Spritzgussform 3 ringförmig abdichtend an dem Kern 1 anliegen. Zwischen den Dichtflächen 7 bilden die Innenwände 6 der Formhälften 4, 5 mit dem Kern 1 eine schmale ringförmige Kavität 8 aus, die in dem in Figur 1c dargestellten Verfahrensschritt mit erstem Material zur Ausbildung einer Deckschicht 9 gefüllt wird.

Nach dem Öffnen der ersten Spritzgussform 3 (Figur 1d) wird der mit der Deckschicht 9 versehene Kern 1 in eine Station verfahren, in der er im Bereich der Deckschicht 9 mit Zugsträngen 10 bewickelt wird (Figur 1e). Die Bewicklung erfolgt vorzugsweise spiralförmig mit einer Schnur oder einem Draht aus einem geeigneten zugfesten Material, wie beispielsweise Nylon, Kevlar, gezwirnte Stofffäden o.ä.

Der so vorkonfektionierte Kern 1 wird nunmehr mittels des Dorns 2 in eine zweite geöffnete Spritzgussform 11 verfahren, die analog zu der ersten Spritzgussform 3 ebenfalls mit zwei halbzylindrischen Formhälften 12, 13 aufgebaut ist. Auch die Formhälften 12, 13 weisen Innenwände 14 auf, die an ihren axialen Enden ringförmige Dichtflächen 15 ausbilden, mit denen sie abdichtend an den entsprechenden Enden des Kerns 1 zur Anlage kommen, wenn die zweite Spritzgussform 11 geschlossen wird (Figur 1g).

Im Vergleich zu der ersten Spritzgussform 3 sind die Innenwände 14 der Formhälften 12, 13 der zweiten Spritzgussform 11 in einem etwas größeren Abstand zu dem Außendurchmesser des Kerns 1 angeordnet, sodass sich eine leere Kavität 16 im geschlossenen Zustand der zweiten Spritzgussform 11 ergibt, die radial außen von den Zugsträngen 10 einen noch leeren Raum zur Verfügung stellt. In dem dargestellten Ausführungsbeispiel sind die Innenwände 14 der Formhälften 12, 13 durch radiale Nuten/Rippen zum Zwecke der Formgebung profiliert. Wenn in dem in Figur 1h dargestellten Schritt die Kavität 16 nun mit einem zweiten Material zur Ausbildung eines Unterbaus 17 gefüllt wird, ergibt sich eine Formung des Unterbaus eines Treibriemens entsprechend der Profilierung der Innenwände 14. Selbstverständlich lassen sich mit dem erfindungsgemäßen Verfahren aber auch Flachriemen herstellen, die keinen profilierten Unterbau aufweisen. In diesem Fall sind die Innenwände 14 nicht profiliert.

Nach dem Öffnen der zweiten Spritzgussform 11 (Figur 1i) wird der auf dem Kern 1 gebildete Aufbau als Wickel 18 von dem Kern 1 abgezogen (Fig. 1k). Der Wickel 18 wird im Allgemeinen in einer Länge hergestellt, die der Breite zahlreicher Treib-riemen entspricht. In Figur 1 ist eine Profilierung über die Länge des Wickels 18 angedeutet, bei der jede Erhebung beispielsweise einem Keilriemen entspricht. Dementsprechend wird der Wickel 18 durch Schnitte senkrecht zu seiner Längsrichtung in entsprechend viele Treibriemen geschnitten. Selbstverständlich können dabei auch Treibriemen hergestellt werden, die jeweils mehrere parallel zueinander angeordnete Keil-Unterbauten enthalten.

Aus Figur 1 ist ersichtlich, dass der Aufbau des Keilriemens in einer der Gebrauchsstellung umgekehrten Weise erfolgt, da die bei der Herstellung radial innen aufgebrachte Deckschicht 9 im Gebrauch radial außen verläuft, während der bei der Herstellung radial außen aufgebrachte Unterbau 17 radial innen verläuft.

Durch übliche Herstellungsmethoden in Spritzgussverfahren kann der dargestellte grundsätzliche Aufbau eines Wickels 18 - und damit eines Treibriemens - ergänzt werden, beispielsweise durch eine textile Abdeckung der Deckschicht oder die Aufbringung einer Verschleißschicht auf den Unterbau. Die Abdeckung der Deckschicht ist beispielsweise dadurch möglich, dass eine entsprechende Lage auf den Kern 1 gewickelt wird, bevor die Deckschicht 9 in dem Schritt gemäß Figur 1c hergestellt wird. In entsprechender Weise können die Innenwände der Formhälften 12, 13 mit einem geeigneten Material, beispielsweise einer Folie, ausgekleidet werden, um auf den Unterbau 17 eine abschließende Schicht aufzubringen.

Figur 1 lässt insgesamt erkennen, dass alle Verfahrensschritte mit dem auf den Dorn 2 aufgesetzten Kern 1 durchgeführt werden, der mit den Formhälften 4, 5 zur Ausbildung der Kavität 8 bzw. mit den Formhälften 12, 13 zur Ausbildung der Kavität 16 zusammenwirkt. Der Dorn 2 wird mit dem aufgesetzten Kern 1 im Wesentlichen in vier Bearbeitungsstationen verfahren, wobei die erste Spritzgussform 3 die erste Bearbeitungsstation beinhaltet, die zweite Bearbeitungsstation durch das Aufwickeln der Zugstränge 10 gebildet wird, die dritte Bearbeitungsstation die zweite Spritzgussform 11 beinhaltet und die vierte Bearbeitungsstation zum Entformen des Wickels 18 von dem Kern 1 dient. Der Transport des Kerns 1 ist mit dem Dorn 2 durch einfaches Verfahren möglich, beispielsweise auch auf einem Rundtisch mit vier Bearbeitungsstationen.

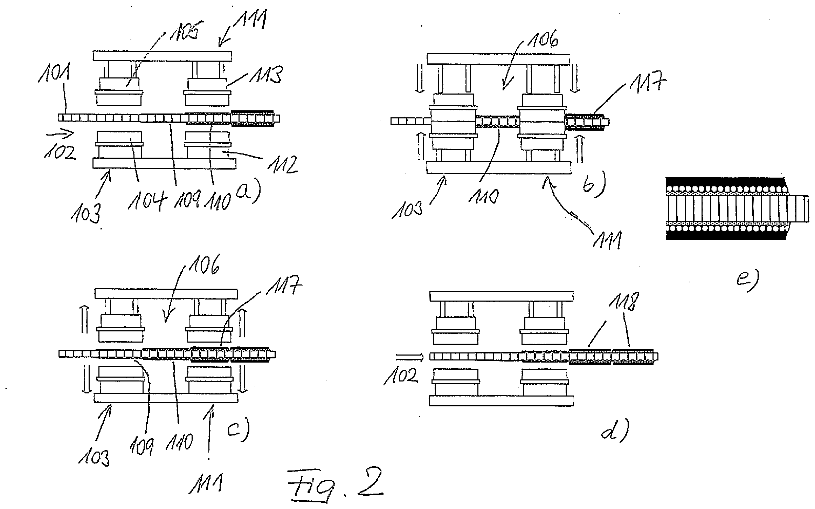

Figur 2 zeigt eine zweite Ausführungsform der Erfindung, bei der ein Kern 101 als langgestreckter - für praktische Zwecke endloser - Träger, vorzugsweise in Form eines Schlauches ausgebildet ist, der in einer durch einen Pfeil 102 angedeuteten Transportrichtung schrittweise transportierbar ist. Auf dem Transportweg gelangt der Kern 101 zunächst in eine erste Spritzgussform 103, die wiederum aus zwei Formhälften 104, 105 besteht, die zum Schließen der Form 103 aufeinander verfahrbar sind und dabei den Kern 101 umschließen. Wiederum dient die erste Spritzgussform 103 dem Aufbringen einer Deckschicht 109 auf den Kern 101, und zwar in einer durch die Formhälften 104, 105 vorgegebenen Länge. An die erste Spritzgussform 103 schließt sich eine (nicht näher dargestellte) Wickelvorrichtung 106 an, mit der Zugstränge 110 auf die aufgebrachte Deckschicht 109 in derselben Länge aufgewickelt werden. In Transportrichtung schließt sich an die Wickelvorrichtung 106 eine zweite Spritzgussform 111 an, die aus zwei Formhälften 112, 113 besteht. Die beiden Spritzgussformen 103 und 111 weisen den prinzipiell gleichen Aufbau wie die Spritzgussformen 3 und 11 auf, die anhand der Figur 1 beschrieben worden sind. Die dort beschriebenen Dichtflächen 7 und 15 wirken in gleicher Weise mit dem Kern 101 zusammen, umgreifen den Kern 101 also abdichtend als Abschluss der durch die Formhälften 104, 105 bzw. 112, 113 ausgebildeten Kavitäten für die Deckschicht 109 bzw. einen Unterbau 117.

Die drei hintereinander angeordneten Bearbeitungsstationen, gebildet aus der ersten Spritzgussform 103, der Wickelvorrichtung 106 und der zweiten Spritzgussform 111 arbeiten gleichzeitig und taktsynchron.

Figur 2a zeigt einen ersten Arbeitstakt, in dem die beiden Spritzgussformen 103 und 111 geöffnet sind, sodass der Kern transportiert werden kann. Dadurch gelangt eine in der ersten Spritzgussform 103 hergestellte Deckschicht 109 in den Bereich der Wickelvorrichtung und ein Abschnitt des Kerns 101, auf dem bereits Zugstränge 110 aufgewickelt sind, gelangt in den Bereich der zweiten Spritzgussform 111. Nach diesem Transporttakt (Figur 2a) findet ein Arbeitstakt (Figur 2b) statt, in dem die beiden Spritzgussformen 103 und 111 geschlossen werden und die Wickelvorrichtung 106 zum Aufwickeln von Zugsträngen 110 aktiviert wird. In der ersten geschlossenen Spritzgussform 103 wird der entsprechende Bereich mit einer Deckschicht 9 im Spritzgussverfahren versehen, während in der zweiten Spritzgussform 111 auf die gewickelten Zugstränge 110 der Unterbau 117 aufgespritzt wird.

Figur 2c zeigt den entsprechenden Zustand am Ende des Arbeitstakts der Figur 2b, wenn die beiden Spritzgussformen 103 und 111 geöffnet werden. Im Bereich der ersten Spritzgussform 103 ist die Deckschicht 109 aufgebracht, im Bereich der Wickelvorrichtung 106 sind die Zugstränge 110 aufgewickelt und im Bereich der zweiten Spritzgussform 111 ist der Unterbau 117 aufgebracht. Beim Weitertransport in Richtung des Pfeils 102 um einen Transportschritt ergibt sich der Zustand gemäß Figur 2d. Es ist erkennbar, dass in den drei Bearbeitungsstationen 103, 106, 111 der dreistufige Aufbau der Wickel 118 komplettiert wird, sodass aus den Bearbeitungsstationen der Kern 101 mit sequenziell aufgebrachten Wickeln 118 austritt, wie dies in Figur 2d verdeutlicht ist. Die Wickel 118 werden in bekannter Technik vom Kern 101 abgezogen und stehen für die Herstellung entsprechend konfektionierter Treibriemen zur Verfügung.

Das anhand der Figur 2 dargestellte Verfahren unterscheidet sich von dem Verfahren gemäß Figur 1 prinzipiell nicht, beruht lediglich auf einem anderen Transportmechanismus zwischen den Bearbeitungsstationen.

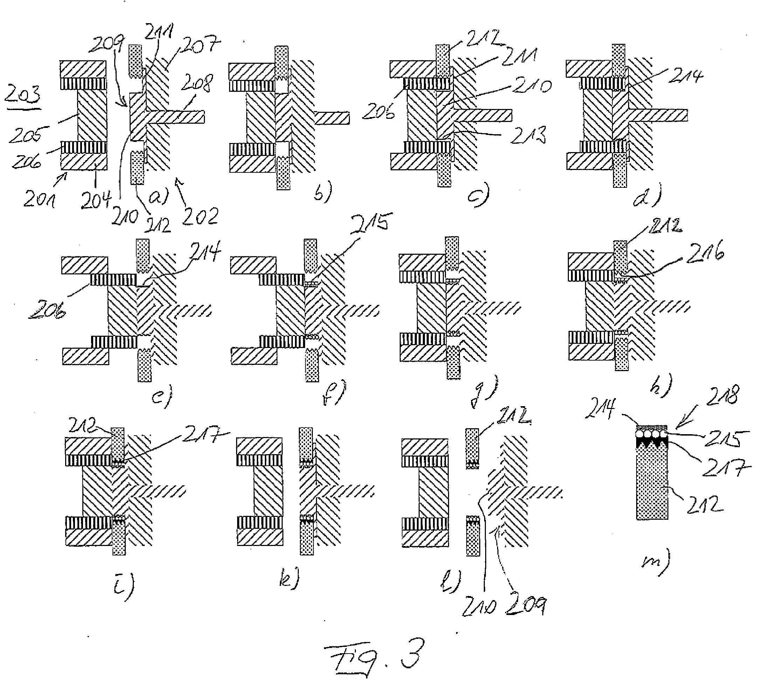

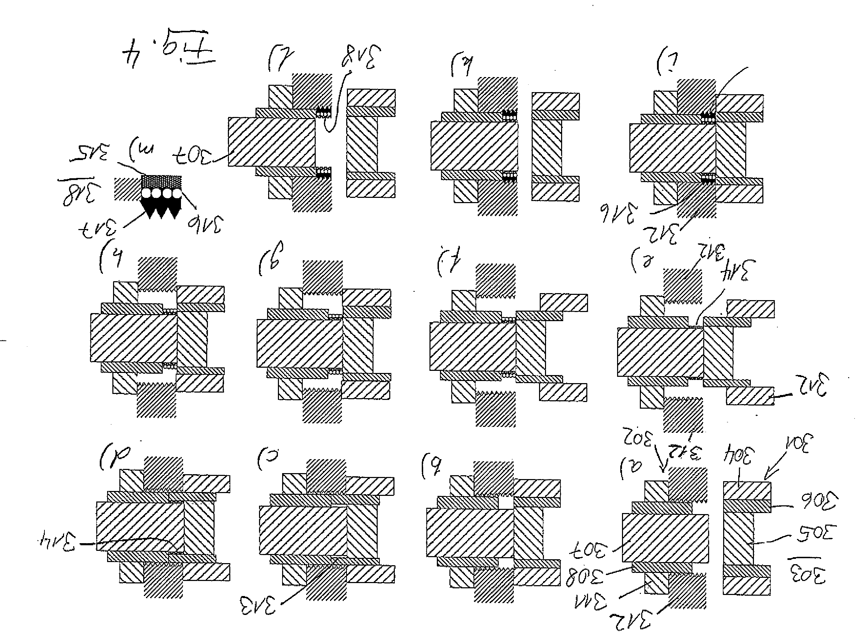

Die in den Figuren 3 und 4 dargestellten Verfahren unterscheiden sich von den Verfahren gemäß den Figuren 1 und 2 dadurch, dass nur eine einzige Gießform verwendet wird, mit der die beiden Spritzgussvorgänge ausgeführt werden. Dargestellt sind wiederum Schnitte durch eine aus zwei Formteilen 201, 202 bestehende Spritzgussform 203. Das erste Formteil 201 besteht aus einem ortsfesten ringförmigen Basiselement 204, an dem ein zentraler kreisförmiger Schieberstempel 205 befestigt ist. Zwischen dem Schieberstempel 205 und dem Basiselement 204 ist ein den Zwischenraum ausfüllender ringförmiger Schieber 206 angeordnet.

Das zweite Formteil 202 ist verfahrbar zum Öffnen und Schließen der Spritzgussform 203 ausgebildet und weist ein Basiselement 207 auf, das eine mittige Durchgangsöffnung aufweist, durch die ein zylindrischer Schaft 208 eines Spuldorns 209 hindurchtritt. Der Spuldorn 209 besteht aus einem mittigen kreisförmigen Stempel 210 und einem dünnen flanschartigen Ansatz 211, der an der Oberfläche des Basiselements 207 anliegt, die zum ersten Formteil 201 zeigt. Der kreisförmige Stempel 210 erhebt sich über den flanschartigen Ansatz 211 mit einem Höhenmaß, das der Dicke eines radial verschiebbaren ringförmigen Formteils 212 entspricht, dessen Innendurchmesser einen definierten Abstand zum Außendurchmesser des kreisförmigen Stempels 210 aufweist.

Der Außendurchmesser des kreisförmigen Stempels 210 ist etwas kleiner als der Innendurchmesser des ringförmigen Schiebers 206.

Figur 3a zeigt den Aufbau in der geöffneten Stellung der Spritzgussform 203. In Figur 3b ist die Spritzgussform geschlossen, wobei sich alle beweglichen Teile 205, 206 und 212 in ihrer Ausgangsstellung befinden. Gemäß Figur 3c wird der ringförmige Schieber 206 in den Zwischenraum zwischen dem radialen Formteil 212 und dem kreisförmigen Stempel 210 soweit eingeschoben, dass er dichtend an dem flanschartigen Ansatz 211 anliegt. Dabei entsteht eine kleine ringförmige Kavität 213 zwischen dem Innendurchmesser des ringförmigen Schiebers 206 und dem Außendurchmesser des kreisförmigen Stempels 210.

Gemäß Figur 3d wird in die Kavität 213 erst das Material eingespritzt, um eine Deckschicht 214 auszubilden.

Nach diesem ersten Spritzgussvorgang werden Teile 204, 206 des ersten Formteils 201 zurückgezogen und somit Platz geschaffen für die Aufwicklung von Zugsträngen 215 auf die gebildete Deckschicht 214, wie dies in Figur 3f dargestellt ist.

Im nachfolgenden Schritt wird die Form 203 wieder geschlossen (Figur 3g) und das radial verstellbare Formteil 212 nach radial innen verstellt, um abdichtend eine definierte Kavität 216 für die Ausbildung eines Unterbaus 217 durch Einspritzen des zweiten Materials zu gewährleisten.

Es ist erkennbar, dass die Innenflächen des radial verstellbaren Formteils 212 profiliert sein können, um eine gewünschte Ausbildung des Unterbaus, beispielsweise in Form eines Keilriemens, zu ermöglichen. Anschließend wird das zweite Formteil 202 zurückgezogen und dadurch die Spritzgussform 203 geöffnet. Mit den radial verstellbaren Formteil 212, das in einer zurückgezogenen Position gehalten wird, kann der hergestellte Wickel 218 von dem kreisförmigen Stempel 210 des Spuldorns 209 abgezogen werden, wie dies Figur 2l verdeutlicht.

Figur 3m zeigt in vergrößerter Darstellung den unteren Teil des radialen Formteils 212 mit dem darauf gebildeten Wickel 218 bestehend aus der Deckschicht 214, den Zugsträngen 215 und dem die Zugstränge 215 zumindest mit einbettenden Unterbau 217. Auch hier findet die Vernetzung bzw. Vulkanisation der Materialien in der geschlossenen Spritzgussform 203 statt. Dabei ist es möglich, die Deckschicht 214 gleich nach ihrer Herstellung oder zusammen mit dem Unterbau 217 zu vernetzen. Ggfs. kann auch eine Deckschicht 214 verwendet werden, die keine Vernetzung benötigt.

Figur 4 verdeutlicht eine prinzipiell ähnliche Herstellung eines Treibriemenwickels mit einer Variante einer Spritzgussform.

Gemäß Figur 4 bilden wiederum ein erstes Formteil 301 und ein zweites Formteil 302 eine Spritzgussform 303.

Das erste Formteil 301 besteht aus einem verschiebbaren ringförmigen Basiselement 304, einen kreisförmigen Schieberstempel 305 und einen den Zwischenraum zwischen dem kreisförmigen Schieberstempel 305 und dem ringförmigen Basiselement 304 ausfüllenden ringförmigen Schieber 306.

Das zweite Formteil 302 weist ein Basiselement 307 auf, auf dem ein ringförmiger Hohlzylinder 308 axial verschiebbar gelagert ist. Der Hohlzylinder weist eine Wandstärke auf, die der Wandstärke des ringförmigen Schiebers 306 entspricht. Mit der zum ersten Formteil zeigenden Stirnseite des Basiselements 304 fluchtet die Stirnseite eines radial verstellbaren Formteils 312, das entlang eines Führungsrings 311 radial verstellbar ist.

In der in Figur 4a dargestellten geöffneten Ausgangsstellung ragt das Basisteil 307 um ein durch die Verschiebestellung des Hohlzylinders 308 einstellbares Maß aus dem ringförmigen Hohlzylinder 308 heraus. Der Außendurchmesser des Basisteils 307 ist um ein definiertes Maß kleiner als der Außendurchmesser des kreisförmigen Schieberstempels 305 des ersten Formteils 301.

Figur 4b verdeutlicht das Schließen der Form durch Aneinanderfahren der Formteile 301, 302. In den durch den Überstand des Basisteils 307 entstehenden ringförmigen Raum fährt nun der ringförmige Schieber 306 ein, bis er sich abdichtend an die Stirnseite des ringförmigen Hohlzylinders 308 anlegt. Da sein Innendurchmesser etwas größer ist als der Außendurchmesser des Basiselements 307, resultiert eine ringförmige Kavität 313, die im nächsten Verfahrensschritt gemäß Figur 4d mit erstem Material gefüllt wird, um eine Deckschicht 314 auszubilden. Nachdem die Deckschicht 314 fertiggestellt ist, wird das ringförmige Basiselement 304 des ersten Formteils zurückgezogen und das radiale Formteil 312 nach radial außen bewegt, sodass die gebildete Deckschicht 314 nunmehr frei liegt. Im nächsten Verfahrensschritt (Figur 4f) werden auf die Deckschicht 314 Zugstränge 315 aufgespult. Im Anschluss daran wird die Form wieder geschlossen (Figur 4h), indem die beiden Formteile 301, 302 gegeneinander gefahren werden. Nachdem auch die radialen Formteile 312 gemäß Figur 4i abdichtend gegen den ringförmigen Hohlzylinder 308 gefahren sind, wird die dadurch gebildete Kavität 316 mit einem zweiten Material zur Ausbildung eines Unterbaus 317 gefüllt. Nach dem Ausvulkanisieren des Unterbaus wird die Spritzgussform 303 geöffnet (Figur 4k). Wenn der Unterbau 317 fertiggestellt und abgekühlt ist, wird das Basiselement 307 zurückgezogen, sodass der gebildete Wickel 318 nunmehr vom einen Spuldorn bildenden Basiselement 307 abgezogen ist.

Figur 4m verdeutlicht den gebildeten Aufbau des Wickels 318 aus Deckschicht 314, Zugsträngen 315 und Unterbau 317.

Es ist erkennbar, dass durch die Stellung des ringförmigen Hohlzylinders 308 die Tiefe der Kavitäten 313, 316, und damit die Breite des gebildeten Wickels 318, einstellbar ist.

## Patentansprüche

1. Verfahren zur Herstellung eines ringförmigen, in einer Laufrichtung endlosen Treibriemens mit einer radial äußeren Deckschicht (9, 109, 214, 314) aus einem ersten Material, einer Zugstranglage mit in Laufrichtung ausgerichteten Zugsträngen (10, 110, 215, 315) und einem aus einem zweiten Material, das ein Elastomer ist, bestehenden Unterbau (17, 117, 217, 317), der zur Anlage an passenden Scheiben eines Antriebs ausgebildet ist, wobei zunächst die Zugstränge (10, 110, 215, 315) auf das erste Material aufgebracht werden und anschließend der Unterbau (17, 117, 217, 317) aus dem zweiten Material in einer Spritzgussform (11, 111, 203, 303) geformt und vernetzt wird, **dadurch gekennzeichnet, dass** das erste Material durch Spritzgießen auf einen Kern (1, 101, 210, 307) aufgebracht wird, dass anschließend die Zugstränge (10, 110, 215, 315) auf das erste Material aufgewickelt werden und dass die so gebildete Zugstranglage mit einer Spritzgusskavität (16, 216, 316) umgeben wird, in die das zweite Material eingespritzt und in der das zweite Material vernetzt wird und dass der Kern (1, 101) ein sich durch die beiden Spritzgussformen (103, 111) erstreckender zylindrischer Träger ist.

2. Verfahren nach Anspruch 1, **dadurch gekennzeichnet, dass** sich der zylindrische Träger durch wenigstens die erste Spritzgussform (103), eine Wickelstation (106) für die Zugstränge (110) und die zweite Spritzgussform (111) als Bearbeitungsstationen gleicher Länge erstreckt und jeweils schrittweise um eine Arbeitsstation in Längsrichtung bewegt wird, sodass auf dem zylindrischen Träger (101) mehrere aneinander anschließende Treibriemen-wickel (118) produziert werden.

3. Verfahren zur Herstellung eines ringförmigen, in einer Laufrichtung endlosen Treibriemens mit einer radial äußeren Deckschicht (9, 109, 214, 314) aus einem ersten Material, einer Zugstranglage mit in Laufrichtung ausgerichteten Zugsträngen (10, 110, 215, 315) und einem aus einem zweiten Material, das ein Elastomer ist, bestehenden Unterbau (17, 117, 217, 317), der zur Anlage an passenden Scheiben eines Antriebs ausgebildet ist, wobei zunächst die Zugstränge (10, 110, 215, 315) auf das erste Material aufgebracht werden und anschließend der Unterbau (17, 117, 217, 317) aus dem zweiten Material in einer Spritzgussform (11, 111, 203, 303) geformt und vernetzt wird, **dadurch gekennzeichnet, dass** das erste Material durch Spritzgießen auf einen Kern (1, 101, 210, 307) aufgebracht wird, dass anschließend die Zugstränge (10, 110, 215, 315) auf das erste Material aufgewickelt werden und dass die so gebildete Zugstranglage mit einer Spritzgusskavität (16, 216, 316) umgeben wird, in die das zweite Material eingespritzt und in der das zweite Material vernetzt wird und dass der Kern durch einen Spuldorn (209) gebildet wird und dass die Spritzgussform (203, 303) mittels beweglicher Teile von einer Spritzgusskavität (213, 313) zur Aufbringung des ersten Materials auf den Kern zu einer Spritzgusskavität (216, 316) für den Unterbau (217, 317) verstellt wird.

4. Verfahren nach Anspruch 3, **dadurch gekennzeichnet, dass** die Spritzgussform (203, 303) zur Aufwicklung der Zugstränge (215, 315) nach dem Einspritzen des ersten Materials und vor dem Spritzvorgang für den Unterbau (217, 317) teilweise geöffnet wird.

5. Verfahren nach Anspruch 3 oder 4, **dadurch gekennzeichnet, dass** die Spritzgussform (203, 303) mittels radial beweglicher Formteile (212, 312) teilweise geöffnet wird.

6. Verfahren zur Herstellung eines ringförmigen, in einer Laufrichtung endlosen Treibriemens mit einer radial äußeren Deckschicht (9, 109, 214, 314) aus einem ersten Material, einer Zugstranglage mit in Laufrichtung ausgerichteten Zugsträngen (10, 110, 215, 315) und einem aus einem zweiten Material, das ein Elastomer ist, bestehenden Unterbau (17, 117, 217, 317), der zur Anlage an passenden Scheiben eines Antriebs ausgebildet ist, wobei zunächst die Zugstränge (10, 110, 215, 315) auf das erste Material aufgebracht werden und anschließend der Unterbau (17, 117, 217, 317) aus dem zweiten Material in einer Spritzgussform (11, 111, 203, 303) geformt und vernetzt wird, **dadurch gekennzeichnet, dass** das erste Material durch Spritzgießen in einer ersten Spritzgussform auf einen Kern (1, 101, 210, 307) aufgebracht wird, dass anschließend die Zugstränge (10, 110, 215, 315) auf das erste Material aufgewickelt werden und dass die so gebildete Zugstranglage mit einer zweiten Spritzgussform (11) umgeben wird, in die das zweite Material eingespritzt und in der das zweite Material vernetzt wird und dass der Kern (1) in Form einer Trommel auf einem Dorn (2) aufgesetzt und in dieser Form in die erste Spritzgussform (3), nach dem Öffnen der ersten Spritzgussform (3) in eine Station zum Bewickeln mit Zugsträngen (10) und anschließend in die zweite Spritzgussform (11) eingefahren wird.

## Claims

1. Method for producing an annular drive belt that is continuous in a running direction, having a radially outer cover layer (9, 109, 214, 314) from a first material, a tension cord tier having tension cords (10, 110, 215, 315) that are aligned in the running direction, and an underside (17, 117, 217, 317) consisting of a second material which is an elastomer, said underside (17, 117, 217, 317) being configured for bearing on matching discs of a drive, wherein the tension cords (10, 110, 215, 315) are first applied to the first material, and the underside (17, 117, 217, 317) from the second material is subsequently moulded and cross-linked in an injection mould (11, 111, 203, 303), **characterized in that**
the first material is applied to a core (1, 101, 210, 307) by injection moulding, **in that** the tension cords (10, 110, 215, 315) are subsequently wound onto the first material, and **in that** the tension cord tier thus formed is surrounded by an injection-moulding cavity (16, 216, 316) into which the second material is injected and in which the second material is cross-linked, and **in that** the core (1, 101) is a cylindrical support which extends through the two injection moulds (103, 111).

2. Method according to Claim 1, **characterized in that** the cylindrical support extends through at least the first injection mould (103), a winding station (106) for the tension cords (110), and the second injection mould (111), the latter three being processing stations of identical length, and in each case in a step-by-step manner is moved about a workstation in the longitudinal direction such that a plurality of mutually contiguous drive-belt wraps (118) are produced on the cylindrical support (101).

3. Method for producing an annular drive belt that is continuous in a running direction, having a radially outer cover layer (9, 109, 214, 314) from a first material, a tension cord tier having tension cords (10, 110, 215, 315) that are aligned in the running direction, and an underside (17, 117, 217, 317) consisting of a second material which is an elastomer, said underside (17, 117, 217, 317) being configured for bearing on matching discs of a drive, wherein the tension cords (10, 110, 215, 315) are first applied to the first material, and the underside (17, 117, 217, 317) from the second material is subsequently moulded and cross-linked in an injection mould (11, 111, 203, 303), **characterized in that** the first material is applied to a core (1, 101, 210, 307) by injection moulding, **in that** the tension cords (10, 110, 215, 315) are subsequently wound onto the first material, and **in that** the tension cord tier thus formed is surrounded by an injection-moulding cavity (16, 216, 316) into which the second material is injected and in which the second material is cross-linked, and **in that** the core is formed by a winding mandrel (209), and **in that** the injection mould (203, 303) by means of movable parts is adjusted from an injection-moulding cavity (213, 313) for applying the first material to the core to an injection-moulding cavity (216, 316) for the underside (217, 317).

4. Method according to Claim 3, **characterized in that** the injection mould (203, 303) after the injection of the first material and prior to the injection procedure for the underside (217, 317) is partially opened in order to wind the tension cords (215, 315) .

5. Method according to Claim 3 or 4, **characterized in that** the injection mould (203, 303) is partially opened by means of radially movable mould parts (212, 312).

6. Method for producing an annular drive belt that is continuous in a running direction, having a radially outer cover layer (9, 109, 214, 314) from a first material, a tension cord tier having tension cords (10, 110, 215, 315) that are aligned in the running direction, and an underside (17, 117, 217, 317) consisting of a second material which is an elastomer, said underside (17, 117, 217, 317) being configured for bearing on matching discs of a drive, wherein the tension cords (10, 110, 215, 315) are first applied to the first material, and the underside (17, 117, 217, 317) from the second material is subsequently moulded and cross-linked in an injection mould (11, 111, 203, 303), **characterized in that** the first material is applied to a core (1, 101, 210, 307) by injection moulding in a first injection mould, **in that** the tension cords (10, 110, 215, 315) are subsequently wound onto the first material, and **in that** the tension cord tier thus formed is surrounded by a second injection mould (11) into which the second material is injected and in which the second material is cross-linked, and **in that** the core (1) in the form of a drum is placed onto a mandrel (2) and in said form is driven into the first injection mould (3), upon opening of the first injection mould (3) is driven into a station for winding with tension cords (10), and subsequently is driven into the second injection mould (11).

## Revendications

1. Procédé de fabrication d'une courroie de transmission continue de forme annulaire dans une direction de marche, avec une couche de revêtement radialement extérieure (9, 109, 214, 314) issue d'un premier matériau, une épaisseur de brins de traction avec des brins de traction (10, 110, 215, 315) agencés dans une direction de marche, et une sous-structure (17, 117, 217, 317) composée d'un deuxième matériau qui est un élastomère, qui est formée pour venir en appui sur des poulies appropriées d'un entraînement, dans lequel les brins de traction (10, 110, 215, 315) sont d'abord appliqués sur le premier matériau, et ensuite la sous-structure (17, 117, 217, 317) est formée et réticulée à partir du deuxième matériau dans un moule d'injection (11, 111, 203, 303),
**caractérisé en ce que** le premier matériau est appliqué par moulage par injection sur un noyau (1, 101, 210, 307), **en ce que**, ensuite, les brins de traction (10, 110, 215, 315) sont enveloppés sur le premier matériau, et **en ce que** l'épaisseur de brins de traction ainsi formée est entourée d'une cavité de moulage par injection (16, 216, 316) dans laquelle le deuxième matériau est injecté et dans laquelle le deuxième matériau est réticulé, et **en ce que** le noyau (1, 101) est un support cylindrique s'étendant à travers les deux moules d'injection (103, 111).

2. Procédé selon la revendication 1, **caractérisé en ce que** le support cylindrique s'étend à travers au moins le premier moule d'injection (103), une station d'enveloppage (106) pour les brins de traction (110) et le deuxième moule d'injection (111), en tant que station de transformation de même longueur, et est à chaque fois déplacé par étape d'une station de travail dans le sens longitudinal de manière à produire plusieurs enveloppements de courroie de transmission (118) successifs adjacents.

3. Procédé de fabrication d'une courroie de transmission continue de forme annulaire dans une direction de marche, avec une couche de revêtement radialement extérieure (9, 109, 214, 314) issue d'un premier matériau, une épaisseur de brins de traction avec des brins de traction (10, 110, 215, 315) agencés dans une direction de marche, et une sous-structure (17, 117, 217, 317) composée d'un deuxième matériau qui est un élastomère, qui est formée pour venir en appui sur des poulies appropriées d'un entraînement, dans lequel les brins de traction (10, 110, 215, 315) sont d'abord appliqués sur le premier matériau, et ensuite la sous-structure (17, 117, 217, 317) est formée et réticulée à partir du deuxième matériau dans un moule d'injection (11, 111, 203, 303),
**caractérisé en ce que** le premier matériau est appliqué par moulage par injection sur un noyau (1, 101, 210, 307), **en ce que**, ensuite, les brins de traction (10, 110, 215, 315) sont enveloppés sur le premier matériau, et **en ce que** l'épaisseur de brins de traction ainsi formée est entourée d'une cavité de moulage par injection (16, 216, 316) dans laquelle le deuxième matériau est injecté et dans laquelle le deuxième matériau est réticulé, et **en ce que** le noyau est formé par une broche de bobinage (209), et **en ce que** le moule d'injection (203, 303) est réglé au moyen de pièces mobiles d'une cavité de moule d'injection (213, 313) pour appliquer le premier matériau sur le noyau vers une cavité de moule d'injection (216, 316) pour la sous-structure (217, 317).

4. Procédé selon la revendication 3, **caractérisé en ce que**, pour l'enveloppage des brins de traction (215, 315), le moule d'injection (203, 303) est ouvert en partie après l'injection du premier matériau et avant le processus d'injection pour la sous-structure (217, 317).

5. Procédé selon la revendication 3 ou 4, **caractérisé en ce que** le moule d'injection (203, 303) est ouvert en partie au moyen de pièces de moule (212, 312) radialement mobiles.

6. Procédé de fabrication d'une courroie de transmission continue de forme annulaire dans une direction de marche, avec une couche de revêtement radialement extérieure (9, 109, 214, 314) issue d'un premier matériau, une épaisseur de brins de traction avec des brins de traction (10, 110, 215, 315) agencés dans une direction de marche, et une sous-structure (17, 117, 217, 317) composée d'un deuxième matériau qui est un élastomère, qui est formée pour venir en appui sur des poulies appropriées d'un entraînement, dans lequel les brins de traction (10, 110, 215, 315) sont d'abord appliqués sur le premier matériau, et ensuite la sous-structure (17, 117, 217, 317) est formée et réticulée à partir du deuxième matériau dans un moule d'injection (11, 111, 203, 303),
**caractérisé en ce que** le premier matériau est appliqué par moulage par injection dans un premier moule d'injection sur un noyau (1, 101, 210, 307), **en ce que**, ensuite, les brins de traction (10, 110, 215, 315) sont enveloppés sur le premier matériau, et **en ce que** l'épaisseur de brins de traction ainsi formée est entourée par un deuxième moule d'injection (11) dans lequel le deuxième matériau est injecté et dans lequel le deuxième matériau est réticulé, et **en ce que** le noyau (1) est placé sous forme d'un tambour sur une broche (2) et, dans cette forme, est introduit dans le premier moule d'injection (3), après l'ouverture du premier moule d'injection (3) dans une station d'enveloppage avec les brins de traction (10), et enfin introduit dans le deuxième moule d'injection (11).
